# EUROPÄISCHE PATENTSCHRIFT

(11) **EP 4 435 313 B1**
(45) Veröffentlichungstag und Bekanntmachung des Hinweises auf die Patenterteilung: **06.08.2025**
(21) Anmeldenummer: 24160435.4
(22) Anmeldetag: 29.02.2024
(51) Int. Cl.: F16P 3/14

(54) **SYSTEM UND VERFAHREN ZUR ÜBERWACHUNG EINES GEFAHRENBEREICHS EINER MASCHINE**
SYSTEM AND METHOD FOR MONITORING A HAZARDOUS AREA OF A MACHINE
SYSTÈME ET PROCÉDÉ DE SURVEILLANCE D'UNE ZONE DANGEREUSE D'UNE MACHINE

(30) Priorität: 22.03.2023 DE 102023107215
(43) Veröffentlichungstag der Anmeldung: 25.09.2024
(73) Patentinhaber: SICK AG, 79183 Waldkirch (DE)
(72) Erfinder: Hammes, Markus, 79117 Freiburg (DE); Hofmann, Christoph, 79108 Freiburg (DE)

(56) Entgegenhaltungen:
- WO-A1-2021/025660

## Beschreibung

Die vorliegende Erfindung betrifft ein System zur Überwachung eines Gefahrenbereichs einer Maschine gemäß dem Oberbegriff von Anspruch 1 und ein Verfahren zur Überwachung eines Gefahrenbereichs einer Maschine gemäß dem Oberbegriff von Anspruch 9.

Stand der Technik für die Absicherung von Industrierobotern ist die Verwendung von Sicherheitslaserscannern zur Bereichsabsicherung oder Lichtgittern zur Zugangsabsicherung. Dabei wird die Anwesenheit einer Person oder eines anderen Objekts im Gefahrenbereich erfasst und die gefahrbringende Bewegung des Roboters abgeschaltet.

Eine Abstands- und Geschwindigkeitsüberwachung stellt eine höhere Entwicklungsstufe dieses bekannten Ansatzes dar, bei der ein Roboter abhängig vom Abstand zwischen Person und Roboter und abhängig von der Annäherungsgeschwindigkeit zunächst verlangsamt wird, was eine Risikominderung darstellt und erst bei Unterschreitung einer weiteren Annäherungsschwelle gestoppt wird. Alternativ wird der Roboter in freie Bereiche umgelenkt, um eine Gefährdung zu vermeiden.

Nachteile des Ansatzes, der eine einfache Anwesenheitsdetektion und daraus resultierend eine sichere Abschaltung verfolgt, ist die starke Einschränkung für die Produktivität. Wann immer die Annäherung einer Person erforderlich ist, muss der Roboter im Stillstand warten, bis sich die Person wieder entfernt hat.

Die WO 2021/025660 A1 offenbart ein Verfahren welches das Empfangen erster Positionsdaten von mindestens einem TOP-Sensor oder einem LIDAR umfasst. Die ersten Positionsdaten sind repräsentativ für die Position eines Menschen in einer gefährlichen Umgebung. Das Verfahren umfasst ferner das Empfangen von zweiten Positionsdaten, die mit einer Vielzahl tragbarer Sensoren verknüpft sind, die mit einer Vielzahl von Personen verknüpft sind. Das Verfahren umfasst ferner das Vergleichen der ersten Positionsdaten mit den zweiten Positionsdaten, um eine Übereinstimmung zwischen den ersten Positionsdaten und den zweiten Positionsdaten festzustellen. Das Verfahren umfasst außerdem das Erfassen eines Signals an eine Warnvorrichtung, die mit der Gefahrenumgebung verbunden ist, so dass die Warnvorrichtung als Reaktion darauf, dass die ersten Positionsdaten nicht mit den zweiten Positionsdaten übereinstimmen, eine Warnung ausgibt.

Eine Aufgabe der Erfindung besteht darin, ein verbessertes System und ein verbessertes Verfahren bereitzustellen, bei welchen sich Personen im Gefahrenbereich aufhalten können und dennoch eine sichere Abschaltung der Maschine erfolgt, falls eine Gefährdung der Person auftreten könnte.

Die Aufgabe wird gemäß Anspruch 1 gelöst durch ein System zur Überwachung eines Gefahrenbereichs einer Maschine, mit mindestens einem Sensor mit mindestens einem räumlichen Überwachungsbereich zur Überwachung des Gefahrenbereichs, und einer Steuer- und Auswerteeinheit, wobei der Sensor ausgebildet ist, zyklisch 3D-Daten des Überwachungsbereichs an die Steuer- und Auswerteeinheit zu senden, wobei der Sensor weiter ausgebildet ist, mindestens ein Schutzbereich im Überwachungsbereich zu erzeugen, wobei die Steuer- und Auswerteeinheit dazu ausgebildet ist, die empfangenen 3D-Daten des Überwachungsbereichs mit bekannten Positionsdaten der Maschine zu vergleichen und auf Übereinstimmung zu prüfen, wobei die Steuer- und Auswerteeinheit ausgebildet ist, Objekte im Überwachungsbereich des Sensors anhand der 3D-Daten zu lokalisieren und deren Abstand zu einem gefahrbringenden Teil der Maschine zu bestimmen, wobei die Steuer- und Auswerteeinheit ausgebildet ist, den Sensor mit dem Schutzbereich zu überbrücken solange eine Übereinstimmung der Positionsdaten vorliegt und den Sensor mit dem Schutzbereich nicht zu überbrücken, falls keine Übereinstimmung der Positionsdaten vorliegt und den Sensor mit dem Schutzbereich nicht zu überbrücken, falls der Abstand von Objekten zu mindestens einem gefahrbringenden Teil der Maschine vordefinierte erste Abstandswerte unterschreitet.

Die Aufgabe wird weiter gemäß Anspruch 9 gelöst durch ein Verfahren zur Überwachung eines Gefahrenbereichs einer Maschine, mit mindestens einem Sensor mit mindestens einem räumlichen Überwachungsbereich zur Überwachung des Gefahrenbereichs, und einer Steuer- und Auswerteeinheit, wobei der Sensor zyklisch 3D-Daten des Überwachungsbereichs an die Steuer- und Auswerteeinheit sendet, wobei der Sensor mindestens ein Schutzbereich im Überwachungsbereich erzeugt, wobei die Steuer- und Auswerteeinheit die empfangenen 3D-Daten des Überwachungsbereichs mit bekannten Positionsdaten der Maschine zu vergleicht und auf Übereinstimmung prüft, wobei die Steuer- und Auswerteeinheit Objekte im Überwachungsbereich des Sensors anhand der 3D-Daten lokalisiert und deren Abstand zu einem gefahrbringenden Teil der Maschine bestimmt, wobei die Steuer- und Auswerteeinheit den Sensor mit dem Schutzbereich überbrückt, solange eine Übereinstimmung der Positionsdaten vorliegt und den Sensor mit dem Schutzbereich nicht überbrückt, falls keine Übereinstimmung der Positionsdaten vorliegt, und den Sensor mit dem Schutzbereich nicht überbrückt, falls der Abstand von Objekten zu mindestens einem gefahrbringenden Teil der Maschine vordefinierte erste Abstandswerte unterschreitet.

Gemäß der Erfindung wird mit Hilfe von Muting, d.h. einer Überbrückung bzw. einer bedingten Überbrückung einer Absicherungsfunktion der Maschine ermöglicht, eine verbesserte Abstands- und Geschwindigkeitsüberwachung zu realisieren.

Dazu werden folgende Systembestandteile verwendet:
Eine beispielsweise nicht-sichere Steuer- und Auswerteeinheit bzw. eine Steuerungseinheit, die ausgebildet ist, 3D-Bilddaten des Gefahrenbereichs des Sensors mit den bekannten Positionsdaten des Roboters zu vergleichen und auf Übereinstimmung zu prüfen.

Zudem ist die Steuer- und Auswerteeinheit ausgebildet, weitere Objekte im Sichtbereich des Sensors anhand der 3D-Daten des Sensors zu lokalisieren und deren Abstand zum Roboter zu bestimmen. Diese Funktionen müssen jedoch nicht nach den Vorgaben der funktionalen Sicherheit ausgeführt werden.

Ein oder beispielsweise mehrere Sensoren, insbesondere 3D-Sensoren sind vorzugsweise sicherheitszertifiziert. Diese erfassen in Echtzeit und mit Synchronisierungsinformationen 3D-Daten des Gefahrenbereichs und liefern die Daten an die Steuer- und Auswerteeinheit.

Der Sensor, beispielsweise eine sichere 3D-Kamera mit integrierter Schutzbereichsfunktion ist zur klassischen Überwachung des Annäherungsbereichs um die Maschine ausgebildet.

Es kann vorteilhaft sein, eine sichere Steuerung für binäre Schaltsignale als Steuer- und Auswerteeinheit zu verwenden, um Aktivierungssignale bzw. Überbrückungssignale und das Signal des Sensors zu kombinieren.

Grundgedanke der Erfindung ist, dass die eigentliche Absicherung der Maschine mit Hilfe einer einfachen Schutzbereichsfunktion des Sensors bzw. Sicherheitssensors erfolgt. Das bedeutet, dass bei Anwesenheit einer Person im Schutzbereich ein Abschaltsignal an die Maschine bzw. deren Steuerung bzw. deren Maschinensteuerung gesendet wird. Diese Absicherung ist bewährt und mit hoher Zuverlässigkeit realisierbar. Im Folgenden wird sie als primäre Sicherheitsfunktion bezeichnet.

Zusätzlich zu dieser Absicherung liefern die übrigen Systemteile eine Funktion, die abhängig von der Situation und abhängig von der Übereinstimmung und Plausibilität der übrigen Informationen (3D-Daten und Maschinenpositionsdaten) ein Signal zur Deaktivierung bzw. Überbrückung der primären Sicherheitsfunktion generiert.

Konkret liefert der oder die Sensoren bzw. 3D-Sensoren Informationen bzw. 3D-Daten über die Umgebung der Maschine, die auf zwei unterschiedliche Arten verwendet werden.

In diesen 3D-Daten wird geprüft, ob die Bereiche, in denen sich laut Maschinensteuerung bewegliche Teile der Maschine befinden sollten, auch in den 3D-Daten bzw. im 3D-Bild von einem Objekt belegt sind. Das kann zum Beispiel mit einem sogenannten Voxelgrid-Ansatz ortsgenau geprüft werden. Dabei werden Volumen-Pixel gebildet, wobei ein Pixel bzw. Voxel einem Raumpunkt entspricht. Diese Teilfunktion dient der Plausibilisierung und bildet eine wirkungsvolle Überprüfung der einwandfreien Funktion des Sensors und der Maschinensteuerung dar.

Zusätzlich dazu können weiterhin stationäre Objekte im Überwachungsbereich auf die gleiche Art zur Plausibilisierung verwendet werden, beispielweise der Boden der von dem Sensor erfasst wird. Da hier eine konkrete Erwartungshaltung überprüft wird, bei der die zufällige Übereinstimmung im Fehlerfall ausgeschlossen werden kann und da es sich hier um ein einfaches Deaktivierungssignal bzw. Mutingsignal handelt, reicht es, im einfachsten Falle eine nicht sichere Steuer- und Auswerteeinheit bzw. eine nicht-sichere Steuerung für die Prüfung zu verwenden.

Zusätzliche einfache Mechanismen wie Synchronisierungsprüfung oder Prüfung von zyklischen Überwachungssignalen (umgangssprachlich Herzschlagsignalen) können ergänzt werden.

Wenn diese Plausibilisierungsprüfungen zu irgendeinem Zeitpunkt die fehlende Übereinstimmung von Erwartung und erfasster Situation ergeben, wird das Deaktivierungssignal bzw. Überbrückungssignal aufgehoben und die primäre Sicherheitsfunktion kann die Maschine bei Anwesenheit einer Person abschalten. Es ist ein besonderer Vorteil dieses Ansatzes, dass bei fehlerhaft erkannter Unstimmigkeit der Plausibilitätsprüfung nicht direkt die Maschine gestoppt wird, sondern erst wenn sich auch tatsächlich ein Mensch in dessen Nähe der gefahrbringenden Bewegung der Maschine befindet.

Das erhöht die Verfügbarkeit der komplexen Absicherung. Umgekehrt würde eine primäre Sicherheitsfunktion, die auf direkter Auswertung der 3D-Daten basiert aufgrund der hohen Komplexität möglicherweise häufiger Fehlabschaltungen erzeugen. Der hier geschilderte Ansatz verhindert Fehlabschaltungen.

In den 3D-Daten wird zudem der Abstand zwischen Person und dem gefahrbringenden Teil der Maschine bestimmt. Zum Beispiel mit dem genannten Voxelgrid-Ansatz, wonach Raumpunkte bestimmt werden oder beispielsweise nach anderen Methoden. Bei Unterschreitung einer vorgegebenen Abstandsschwelle wird das Deaktivierungssignal bzw. Überbrückungssignal gelöscht und die primäre Sicherheitsfunktion schaltet die Maschine ab.

Ein weiterer Vorteil von dieser invertierten Sicherheitslogik mit dem anliegenden Deaktivierungssignal bzw. Mutingsignal ist, dass eine Ansprechzeit der Sicherheitsmaßnahme nicht durch die Ansprechzeit des Sensors begrenzt wird. Das Abschaltsignal der primären Sicherheitsfunktion bzw. des Sensors liegt ja bei Anwesenheit einer Person im Schutzbereich bereits vor und wird durch das Deaktivierungsignal bzw. Mutingsignal unterdrückt. Sobald das Deaktivierungssignal oder Mutingsignal wegfällt, erreicht das Abschaltsignal die Maschine und die Maschine wird unverzüglich gestoppt.

Ein Annäherungsvorgang kann beispielsweise zusammengefasst so ablaufen:
Eine Person nähert sich der Maschine und betritt den Schutzbereich bzw. das Schutzbereich. Ohne Muting im Sinne dieser Erfindung würde die primäre Sicherheitsfunktion jetzt eine Abschaltung veranlassen. Der 3D-Sensor erfasst jedoch zusätzlich die genaue Position der Person und überbrückt die primäre Sicherheitsfunktion, sofern der Abstand zur Gefahrenstelle noch ausreichend groß ist. Zu diesem Zeitpunkt ist der Abstand der Person noch groß genug, dass die Maschine weiterarbeiten kann. Ggf. wird die Maschine beispielsweise in einen Modus mit verlangsamtem Bewegungsablauf geschaltet. Es liegt eine Übereinstimmung zwischen den Positionsdaten des beweglichen Teils der Maschine aus der Maschinensteuerung und den 3D-Daten des Sensors vor, so dass ein Deaktivierungssignal bzw. Überbrückungssignal die Abschaltung der Maschine bisher verhindert.

Die Person nähert sich weiter an. Der Sensor bzw. 3D-Sensor erfasst die bis dahin noch unkritische Annäherung und die Steuer- und Auswerteinheit veranlasst über die Maschinensteuerung den beweglichen Teil der Maschine zurückzuweichen. Die Übereinstimmung von 3D-Daten des Sensors und Maschinendaten der Maschinensteuerung ist weiterhin gegeben und das Abschaltsignal der primären Sicherheitsfunktion wird weiterhin deaktiviert bzw. überbrückt.

Die Person nähert sich weiter an und erreicht einen kritischen Abstandsbereich. Der Sensor bzw. 3D-Sensor erfasst die kritische Annäherung und löscht das Deaktivierungs- bzw. Überbrückungssignal. Das primäre Abschaltsignal gelangt zur Maschine und veranlasst den Stopp der Maschine.

Alle komplexen Funktionsteile, welche die Abstands- und Geschwindigkeitsüberwachung erfordert, sind mit dieser inversen Sicherheitslogik in den nicht-sicheren Teil des Systems, also der nicht sicheren Steuer- und Auswerteeinheit verlagert.

Durch die Plausibilisierung diversitär ermittelter Informationen, also der 3D-Daten des Sensors und der Maschinendaten der Maschinensteuerung der Maschine erreicht das System ein hohes Sicherheitsniveau, ohne eine sichere Steuerungshardware zu erfordern. Die Ansprechzeit des primären Sicherheitssensors ist mit diesem Ansatz weniger relevant. Das Abschaltsignal liegt ja bereits an, wenn das Deaktivierungssignal bzw. das Überbrückungssignal aufgehoben wird.

Fehlerhafte Abschaltungen können überhaupt nur dann auftreten, wenn sowohl ein Schutzbereichseingriff vorliegt als auch die Plausibilitätsprüfung im komplexen Systemteil fehlschlägt. Der übliche Zusammenhang wonach ein komplexes System ggf. zu häufigeren Fehlabschaltungen führen würde wird so umgangen.

In Weiterbildung der Erfindung ist ein erster Sensor als Sensor ausgebildet, zyklisch 3D-Daten des Überwachungsbereichs an die Steuer- und Auswerteeinheit zu liefern und ein zweiter Sensor als Sensor ausgebildet den Schutzbereich zu erzeugen.

Bei dem ersten Sensor kann es sich beispielsweise um eine 3D-Kamera, ein Laserscanner mit einem Schutzbereich handeln. Bei der 3D-Kamera kann es sich beispielsweise um eine 3D-Lichtlaufzeitkamera oder beispielsweise um eine 3D-Stereokamera handeln.

Bei dem zweiten Sensor kann es sich beispielsweise um eine 3D-Kamera, ein Laserscanner mit einem Schutzbereich oder einen Schutzbereich handeln. Bei der 3D-Kamera kann es sich beispielsweise um eine 3D-Lichtlaufzeitkamera oder beispielsweise um eine 3D-Stereokamera handeln.

In Weiterbildung der Erfindung ist die Steuer- und Auswerteeinheit ausgebildet, mindestens einem Teil der Maschine zu veranlassen eine Ausweichbewegung oder eine Verlangsamung durchzuführen, falls der Abstand von Objekten zu einem gefahrbringenden Teil der Maschine vordefinierte zweite Abstandswerte unterschreitet.

Gemäß der Weiterbildung der Erfindung ist die Steuer- und Auswerteeinheit ausgebildet, den gefahrbringenden Teil der Maschine umzulenken oder abzubremsen, um die Produktivität des Arbeitsablaufs aufrecht zu erhalten. Dadurch ist die Steuerung der Maschine sehr flexibel, da dieser Teil der Funktion nicht Bestandteil der Sicherheitsfunktion ist.

In Weiterbildung der Erfindung ist die Steuer- und Auswerteeinheit dazu ausgebildet, die empfangenen 3D-Daten des Überwachungsbereichs des Sensors mit bekannten Positionsdaten der Umgebung zu vergleichen und auf Übereinstimmung zu prüfen.

Gemäß der Weiterbildung wird beispielsweise eine statische Umgebung eingelernt. Damit können bereits dynamisch bewegte Objekt wie Personen einfacher detektiert und verfolgt werden.

In Weiterbildung der Erfindung ist die Steuer- und Auswerteeinheit dazu ausgebildet ist, die empfangenen 3D-Daten des Überwachungsbereichs des Sensors mit Positionsdaten von weiteren Sensoren zu vergleichen und auf Übereinstimmung zu prüfen. Damit werden die 3D-Daten des Sensors mit 3D-Daten von weiteren Sensoren verglichen und können so plausibilisiert werden.

Der weitere Sensor kann beispielsweise ein Lichtlaufzeitsensor, ein Laserscanner, ein Laserscanner mit mehreren Scanebenen, eine Lichtlaufzeitkamera, eine Stereokamera, ein FMCW-Lidarsensor, ein Radarsensor, ein Ultrabreitband-Funksensor oder eine Infrarotkamera sein.

Derartige Sensoren sind geeignet einen räumlichen Überwachungsbereich wirksam zu überwachen.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts.

Beispielsweise arbeitet der Lichtlaufzeitsensor nach einem direkten Lichtlaufzeitverfahren (dTOF), wonach kurze Lichtpulse oder Lichtpulsgruppen ausgesandt werden und die Zeit bis zum Empfang einer Remission oder Reflexion der Lichtpulse an einem Objekt gemessen wird. Die Lichtsignale sind dabei durch Lichtpulse gebildet.

Jedoch sind auch andere Lichtlaufzeitverfahren möglich, beispielsweise das Phasenverfahren, wonach Sendelicht amplitudenmoduliert ist und eine Phasenverschiebung zwischen Sende- und Empfangslicht bestimmt wird, wobei die Phasenverschiebung ebenfalls ein Maß für die Lichtlaufzeit ist (indirektes Lichtlaufzeitverfahren, iTOF).

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden beispielsweise über ein Gating-Signal die Einzelphotonenevents in zwei Zähler verteilt und aus dem Verhältnis der Zählerstände eine Phase berechnet.

Eine 3D-Kamera überwacht beispielsweise den Überwachungsbereich mittels einer Vielzahl von erfassten Distanzwerten. Eine 3D-Kamera hat den Vorteil, dass ein volumenartiger Schutzbereich einfach überwacht werden kann.

Eine Stereokamera überwacht beispielsweise den Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger Schutzbereich überwacht werden kann.

Die Radarsensoren bilden beispielsweise räumliche Überwachungsbereiche zur Überwachung des Schutzbereiches. Die Schutzbereiche können nahezu beliebige Geometrien aufweisen. Beispielsweise sind die Schutzbereiche ausgehend vom Radarsensorgehäuse kegelförmig bzw. keulenförmig für räumliche Schutzbereiche. Beispielsweise beträgt ein Öffnungswinkel eines Schutzbereiches +/-60°. Es sind auch kleinere oder größere Öffnungswinkel vorgesehen. Jedoch können bei einem Sensor mit mehr als einer Empfangsantenne und/oder Sendeantenne auch rechteckförmige Schutzbereiche bzw. quaderförmige Schutzbereiche gebildet werden.

Beispielsweise emittiert der oder jeder Radarsensor mit der Empfangsantenne Radarwellen im Frequenzbereich von 40 GHz bis 125 GHz. Das Frequenzband des Radarsensors kann dabei kleiner sein als der angegebene Frequenzbereich.

Beispielsweise ist der Sensor ein Ultrabreitband-Funksensor. Der Ultrabreitband-Funksensor bildet ein Funkortungssystem insbesondere ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20 % der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

In Weiterbildung der Erfindung ist die Steuer- und Auswerteeinheit ausgebildet ist den Schutzbereich zu aktivieren, wenn der gefahrbringende Teil der Maschine sich in einer unerlaubten Position befindet.

Diese Plausibilitätsprüfung kann dahingehend erweitert werden, dass die Position der Teile der Maschine auch mit vorher konfigurierten nicht erlaubten Positionen bzw. nicht erlaubten Bereichen, sogenannte ,No-go-Areas' verglichen wird. Auf diese Art kann verhindert werden, dass sich Teile der Maschine an Positionen befinden, wo diese nicht sein dürfen. Auch hier ist es vorteilhaft, dass Abschaltungen erst dann erfolgen, wenn sich tatsächlich eine Person annähert. Die Produktivität der Anlage wird so erhöht.

In Weiterbildung der Erfindung ist die Maschine eine mobile Maschine oder eine ortsfeste Maschine.

Bei der ortsfesten Maschine kann es sich beispielsweise um eine Presse, eine Werkzeugmaschine, eine Montagemaschine oder ähnliches handeln. Die ortsfesten Maschinen weisen einen ortsfesten Teil auf und mindestens einen beweglichen Teil auf, wobei das bewegliche Teil eine gefahrbringende Bewegung ausführen kann.

Bei der mobilen Maschine kann es sich beispielsweise um ein autonom fahrendes Fahrzeug oder einen autonom fahrendenden Roboter handeln.

In Weiterbildung der Erfindung ist die Maschine ein Roboter ist und der Gefahrenbereich der Maschine ein Gefahrenbereich des Roboters ist.

Bei dem Roboter kann es sich beispielsweise um einen mehrachsigen Roboter handeln, beispielsweise um einen Montageroboter in einer Fertigungslinie.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

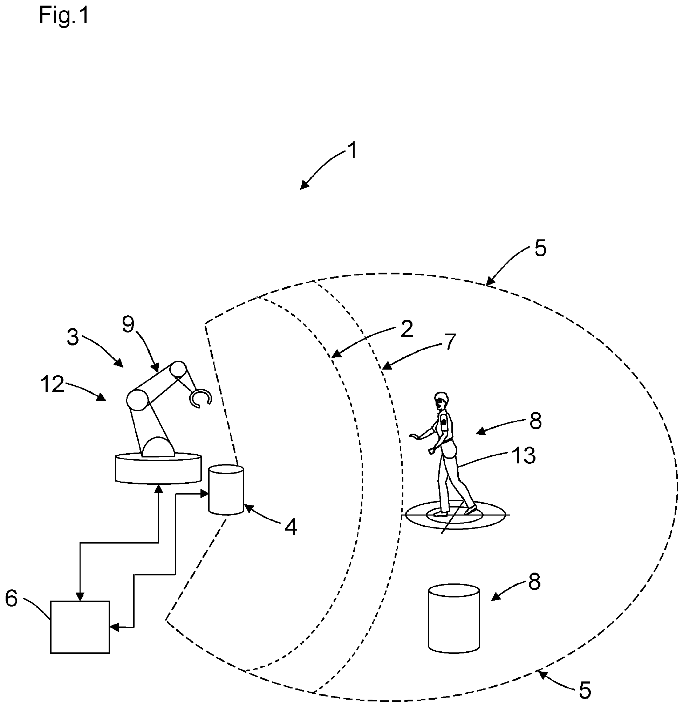

Figur 1 bis 4 jeweils ein System zur Überwachung eines Gefahrenbereichs.

In den nachfolgenden Figuren sind identische Teile mit identischen Bezugszeichen versehen.

Figur 1 zeigt System 1 zur Überwachung eines Gefahrenbereichs 2 einer Maschine 3, mit mindestens einem Sensor 4 mit mindestens einem räumlichen Überwachungsbereich 5 zur Überwachung des Gefahrenbereichs 2, und einer Steuer- und Auswerteeinheit 6, wobei der Sensor 4 ausgebildet ist, zyklisch 3D-Daten des Überwachungsbereichs 5 an die Steuer- und Auswerteeinheit 6 zu senden, wobei der Sensor 4 weiter ausgebildet ist, mindestens ein Schutzbereich 7 im Überwachungsbereich 5 zu erzeugen, wobei die Steuer- und Auswerteeinheit 6 dazu ausgebildet ist, die empfangenen 3D-Daten des Überwachungsbereichs 5 mit bekannten Positionsdaten der Maschine 3 zu vergleichen und auf Übereinstimmung zu prüfen, wobei die Steuer- und Auswerteeinheit 6 ausgebildet ist, Objekte 8 im Überwachungsbereich 5 des Sensors 4 anhand der 3D-Daten zu lokalisieren und deren Abstand zu einem gefahrbringenden Teil 9 der Maschine 3 zu bestimmen, wobei die Steuer- und Auswerteeinheit 6 ausgebildet ist, den Sensor 4 mit dem Schutzbereich 7 zu überbrücken solange eine Übereinstimmung der Positionsdaten vorliegt und den Sensor 4 mit dem Schutzbereich 7 nicht zu überbrücken, falls keine Übereinstimmung der Positionsdaten vorliegt und den Sensor 4 mit dem Schutzbereich 7 nicht zu überbrücken, falls der Abstand von Objekten 8 zu mindestens einem gefahrbringenden Teil 9 der Maschine 3 vordefinierte erste Abstandswerte unterschreitet.

Beispielsweise ist die Maschine 3 ein Roboter 12 und der Gefahrenbereich 2 der Maschine 3 ist ein Gefahrenbereich 2 des Roboters 12.

Bei dem Roboter 12 kann es sich beispielsweise um einen mehrachsigen Roboter 12 handeln, beispielsweise um einen Montageroboter in einer Fertigungslinie.

Beispielsweise ist die Maschine 3 eine mobile Maschine oder eine ortsfeste Maschine.

Mit Hilfe von Muting, d.h. einer Überbrückung bzw. einer bedingten Überbrückung einer Absicherungsfunktion des Roboters 12 wird es ermöglicht, eine verbesserte Abstands- und Geschwindigkeitsüberwachung zu realisieren.

Dazu werden folgende Systembestandteile verwendet:
Eine beispielsweise nicht-sichere Steuer- und Auswerteeinheit 6 bzw. eine Steuerungseinheit, die ausgebildet ist, 3D-Bilddaten des Überwachungsbereichs 5 des Sensors 4 mit den bekannten Positionsdaten des Roboters 12 zu vergleichen und auf Übereinstimmung zu prüfen.

Zudem ist die Steuer- und Auswerteeinheit 6 ausgebildet, weitere Objekte 8 im Sichtbereich des Sensors 4 anhand der 3D-Daten des Sensors 4 zu lokalisieren und deren Abstand zum Roboter 12 zu bestimmen. Diese Funktionen müssen jedoch nicht nach den Vorgaben der funktionalen Sicherheit ausgeführt werden.

Ein oder beispielsweise mehrere Sensoren 4, insbesondere 3D-Sensoren sind vorzugsweise sicherheitszertifiziert. Diese erfassen in Echtzeit und mit Synchronisierungsinformationen 3D-Daten des Überwachungsbereichs, Schutzbereichs oder Gefahrenbereichs und liefern die Daten an die Steuer- und Auswerteeinheit 6.

Der Sensor 4, beispielsweise eine sichere 3DKamera mit integrierter Schutzbereichsfunktion ist zur klassischen Überwachung des Annäherungsbereichs um den Roboter 12 ausgebildet.

Es kann vorteilhaft sein, eine sichere Steuerung für binäre Schaltsignale als Steuer- und Auswerteeinheit 6 zu verwenden, um Aktivierungssignale bzw. Überbrückungssignale und das Signal des Sensors 4 zu kombinieren.

Grundgedanke ist, dass die eigentliche Absicherung des Roboters 12 mit Hilfe einer einfachen Schutzbereichsfunktion des Sensors 4 bzw. Sicherheitssensors erfolgt. Das bedeutet, dass bei Anwesenheit einer Person 13 als Objekt 8 im Schutzbereich 7 ein Abschaltsignal an den Roboter 12 bzw. deren Steuerung bzw. deren Maschinensteuerung gesendet wird. Diese Absicherung ist bewährt und mit hoher Zuverlässigkeit realisierbar. Im Folgenden wird sie als primäre Sicherheitsfunktion bezeichnet.

Zusätzlich zu dieser Absicherung liefern die übrigen Systemteile eine Funktion, die abhängig von der Situation und abhängig von der Übereinstimmung und Plausibilität der übrigen Informationen (3D-Daten und Maschinenpositionsdaten) ein Signal zur Deaktivierung bzw. Überbrückung der primären Sicherheitsfunktion generiert.

Konkret liefert der oder die Sensoren 4 bzw. 3D-Sensoren Informationen bzw. 3D-Daten über die Umgebung des Roboters 12, die auf zwei unterschiedliche Arten verwendet werden.

In diesen 3D-Daten wird geprüft, ob die Bereiche, in denen sich gemäß der Robotersteuerung bewegliche Teile 9 des Roboters befinden sollten, auch in den 3D-Daten bzw. im 3D-Bild von einem Objekt 8 belegt sind. Diese Teilfunktion dient der Plausibilisierung und bildet eine wirkungsvolle Überprüfung der einwandfreien Funktion des Sensors 4 und der Robotersteuerung dar.

Zusätzlich dazu können weiterhin stationäre Objekte 8 im Überwachungsbereich 5 auf die gleiche Art zur Plausibilisierung verwendet werden, beispielweise der Boden der von dem Sensor 4 erfasst wird. Da hier eine konkrete Erwartungshaltung überprüft wird, bei der die zufällige Übereinstimmung im Fehlerfall ausgeschlossen werden kann und da es sich hier um ein einfaches Deaktivierungssignal bzw. Mutingsignal handelt, reicht es, im einfachsten Falle eine nicht sichere Steuer- und Auswerteeinheit 6 bzw. eine nicht-sichere Steuerung für die Prüfung zu verwenden.

Zusätzliche einfache Mechanismen wie Synchronisierungsprüfung oder Prüfung von zyklischen Überwachungssignalen können ergänzt werden.

Wenn diese Plausibilisierungsprüfungen zu irgendeinem Zeitpunkt die fehlende Übereinstimmung von Erwartung und erfasster Situation ergeben, wird das Deaktivierungssignal bzw. Überbrückungssignal aufgehoben und die primäre Sicherheitsfunktion kann den Roboter 12 bei Anwesenheit einer Person 13 abschalten. So wird bei fehlerhaft erkannter Unstimmigkeit der Plausibilitätsprüfung nicht direkt der Roboter 12 gestoppt, sondern erst wenn sich auch tatsächlich ein Mensch in dessen Nähe der gefahrbringenden Bewegung des Roboters befindet.

In den 3D-Daten wird zudem der Abstand zwischen der Person 12 bzw. dem Objekt 8 und dem gefahrbringendem Teil des Roboters 13 bestimmt. Bei Unterschreitung einer vorgegebenen Abstandsschwelle wird das Deaktivierungssignal bzw. Überbrückungssignal gelöscht und die primäre Sicherheitsfunktion schaltet den Roboter 12 ab.

Das Abschaltsignal des Sensors 4 liegt bereits vor und wird durch das Deaktivierungsignal bzw. Mutingsignal unterdrückt. Sobald das Deaktivierungssignal oder Mutingsignal wegfällt, erreicht das Abschaltsignal den Roboter 12 und der Roboter 12 wird unverzüglich gestoppt.

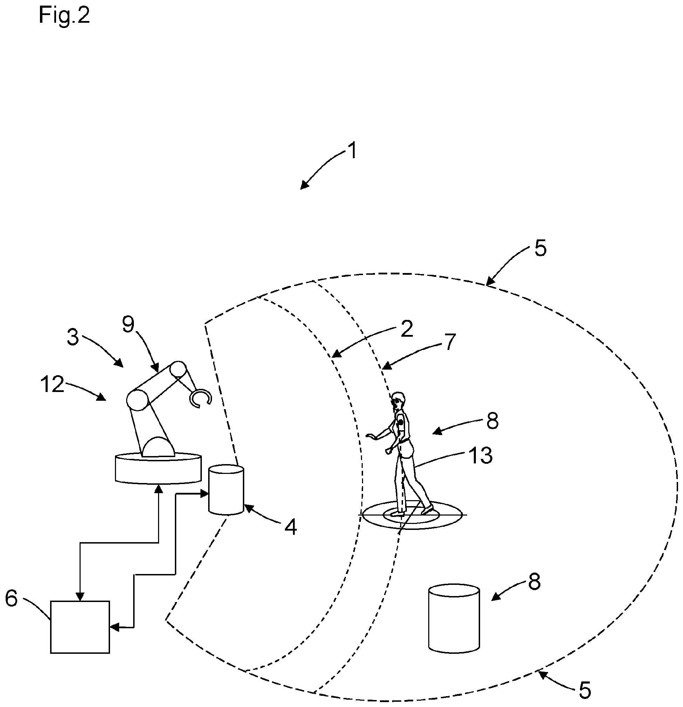

Ein Annäherungsvorgang kann beispielsweise zusammengefasst so ablaufen:
Eine Person 13 nähert sich gemäß Figur 2 dem Roboter 12 und betritt den Schutzbereich 7. Zu diesem Zeitpunkt ist der Abstand der Person 13 noch groß genug, dass der Roboter 12 weiterarbeiten kann. Ggf. wird der Roboter 12 beispielsweise in einen Modus mit verlangsamten Bewegungsablauf geschaltet. Es liegt eine Übereinstimmung zwischen den Positionsdaten des beweglichen Teils 9 des Roboters 12 aus der Maschinensteuerung und den 3D-Daten des Sensors 4 vor, so dass ein Deaktivierungssignal bzw. Überbrückungssignal die Abschaltung des Roboters 12 bisher verhindert.

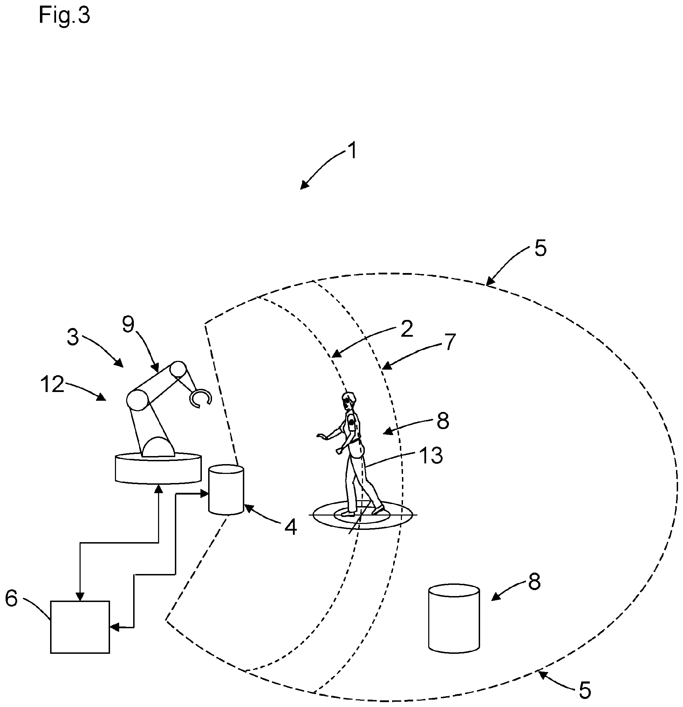

Die Person 13 nähert sich gemäß Figur 3 weiter an. Der Sensor 4 bzw. 3D-Sensor erfasst die bis dahin noch unkritische Annäherung und die Steuer- und Auswerteinheit 6 veranlasst über die Robotersteuerung den beweglichen Teil 9 des Roboters 12 zurückzuweichen. Die Übereinstimmung von 3D-Daten des Sensors 4 und Roboterdaten der Robotersteuerung ist weiterhin gegeben und das Abschaltsignal der primären Sicherheitsfunktion wird weiterhin deaktiviert bzw. überbrückt.

Die Person 13 nähert sich weiter an und erreicht einen kritischen Abstandsbereich. Der Sensor 4 bzw. 3D-Sensor erfasst die kritische Annäherung und löscht das Deaktivierungs- bzw. Überbrückungssignal. Das primäre Abschaltsignal gelangt zum Roboter 12 und veranlasst den Stopp des Roboters 12.

Alle komplexen Funktionsteile, welche die Abstands- und Geschwindigkeitsüberwachung erfordert, sind mit dieser inversen Sicherheitslogik in den nicht-sicheren Teil des Systems 1, also der nicht sicheren Steuer- und Auswerteeinheit 6 verlagert.

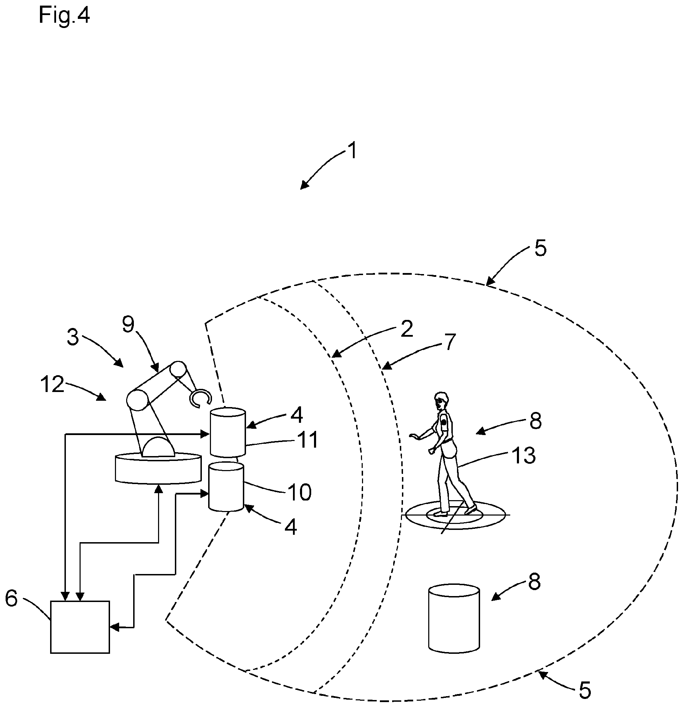

Beispielsweise ist gemäß Figur 4 ein erster Sensor 10 als Sensor 4 ausgebildet, zyklisch 3D-Daten des Überwachungsbereichs 5 an die Steuer- und Auswerteeinheit 6 zu liefern und ein zweiter Sensor 11 als Sensor 4 ausgebildet einen Schutzbereich 7 zu erzeugen.

Bei dem ersten Sensor 10 kann es sich beispielsweise um eine 3D-Kamera, ein Laserscanner mit einem Schutzbereich handeln. Bei der 3D-Kamera kann es sich beispielsweise um eine 3D-Lichtlaufzeitkamera oder beispielsweise um eine 3D-Stereokamera handeln.

Bei dem zweiten Sensor 11 kann es sich beispielsweise um eine 3D-Kamera, ein Laserscanner mit einem Schutzbereich oder einen Schutzbereich handeln. Bei der 3D-Kamera kann es sich beispielsweise um eine 3D-Lichtlaufzeitkamera oder beispielsweise um eine 3D-Stereokamera handeln.

Beispielsweise ist die Steuer- und Auswerteeinheit 6 ausgebildet, mindestens einem Teil 9 des Roboters 12 zu veranlassen eine Ausweichbewegung oder eine Verlangsamung durchzuführen, falls der Abstand von Objekten 8 zu einem gefahrbringenden Teil 9 des Roboters vordefinierte zweite Abstandswerte unterschreitet.

Beispielsweise ist die Steuer- und Auswerteeinheit 6 ausgebildet, den gefahrbringenden Teil 9 des Roboters umzulenken oder abzubremsen, um die Produktivität des Arbeitsablaufs aufrecht zu erhalten. Dadurch ist die Steuerung des Roboters sehr flexibel, da dieser Teil der Funktion nicht Bestandteil der Sicherheitsfunktion ist.

Beispielsweise ist die Steuer- und Auswerteeinheit 6 dazu ausgebildet, die empfangenen 3D-Daten des Überwachungsbereichs 5 mit bekannten Positionsdaten der Umgebung zu vergleichen und auf Übereinstimmung zu prüfen.

Beispielsweise wird eine statische Umgebung eingelernt. Damit können bereits dynamisch bewegte Objekte 8 wie Personen 13 einfacher detektiert und verfolgt werden.

Beispielsweise ist die Steuer- und Auswerteeinheit 6 ausgebildet, den Schutzbereich 7 zu aktivieren, wenn der gefahrbringende Teil 9 des Roboters 12 sich in einer unerlaubten Position befindet.

Diese Plausibilitätsprüfung kann dahingehend erweitert werden, dass die Position der Teile 9 des Roboters 12 auch mit vorher konfigurierten nicht erlaubten Positionen bzw. nicht erlaubten Bereichen verglichen wird. Auf diese Art kann verhindert werden, dass sich Teile 9 des Roboters an Positionen befinden, wo diese nicht sein dürfen. Auch hier ist es vorteilhaft, dass Abschaltungen erst dann erfolgen, wenn sich tatsächlich eine Person 13 annähert. Die Produktivität der Anlage wird so erhöht.

### Bezugszeichen:

- 1: System
- 2: Gefahrenbereich
- 3: Maschine
- 4: Sensor
- 5: räumlicher Überwachungsbereich
- 6: Steuer- und Auswerteeinheit
- 7: Schutzbereich
- 8: Objekte
- 9: gefahrbringender Teil der Maschine
- 10: erster Sensor
- 11: zweiter Sensor
- 12: Roboter
- 13: Person

## Patentansprüche

1. System (1) zur Überwachung eines Gefahrenbereichs (2) einer Maschine (3), mit mindestens einem Sensor (4) mit mindestens einem räumlichen Überwachungsbereich (5) zur Überwachung des Gefahrenbereichs (2),
und einer Steuer- und Auswerteeinheit (6),
wobei der Sensor (3) ausgebildet ist, zyklisch 3D-Daten des Überwachungsbereichs (5) an die Steuer- und Auswerteeinheit (6) zu senden,
wobei der Sensor (4) weiter ausgebildet ist, mindestens ein Schutzbereich (7) im Überwachungsbereich (5) zu erzeugen,
wobei die Steuer- und Auswerteeinheit (6) dazu ausgebildet ist, die empfangenen 3D-Daten des Überwachungsbereichs (5) mit bekannten Positionsdaten der Maschine (3) zu vergleichen und auf Übereinstimmung zu prüfen,
wobei die Steuer- und Auswerteeinheit (6) ausgebildet ist, Objekte (8) im Überwachungsbereich (5) des Sensors (4) anhand der 3D-Daten zu lokalisieren und deren Abstand zu einem gefahrbringenden Teil (9) der Maschine (3) zu bestimmen, wobei die Steuer- und Auswerteeinheit (6) ausgebildet ist, den Sensor (4) mit dem Schutzbereich (7) nicht zu überbrücken, falls der Abstand von Objekten (8) zu mindestens einem gefahrbringenden Teil der Maschine (3) vordefinierte erste Abstandswerte unterschreitet,
**dadurch gekennzeichnet, dass**
die Steuer- und Auswerteeinheit (6) ausgebildet ist, den Sensor (4) mit dem Schutzbereich (7) zu überbrücken, solange eine Übereinstimmung der Positionsdaten vorliegt und
den Sensor (4) mit dem Schutzbereich (7) nicht zu überbrücken, falls keine Übereinstimmung der Positionsdaten vorliegt.

2. System (1) nach Anspruch 1, **dadurch gekennzeichnet, dass** ein erster Sensor (10) als Sensor (4) ausgebildet ist, zyklisch 3D-Daten des Überwachungsbereichs (5) an die Steuer- und Auswerteeinheit (6) zu liefern und ein zweiter Sensor (11) als Sensor (4) ausgebildet ist das Schutzbereich (7) zu erzeugen.

3. System (1) nach Anspruch 1, **dadurch gekennzeichnet, dass** die Steuer- und Auswerteeinheit (6) ausgebildet ist, mindestens einem Teil (9) der Maschine (3) zu veranlassen eine Ausweichbewegung durchzuführen, falls der Abstand von Objekten (8) zu einem gefahrbringenden Teil (9) der Maschine (3) vordefinierte zweite Abstandswerte unterschreitet.

4. System (1) nach einem der vorhergehenden Ansprüche, **dadurch gekennzeichnet, dass** die Steuer- und Auswerteeinheit (6) dazu ausgebildet ist, die empfangenen 3D-Daten des Überwachungsbereichs (5) des Sensors (4) mit bekannten Positionsdaten der Umgebung zu vergleichen und auf Übereinstimmung zu prüfen.

5. System (1) nach einem der vorhergehenden Ansprüche, **dadurch gekennzeichnet, dass** die Steuer- und Auswerteeinheit (6) dazu ausgebildet ist, die empfangenen 3D-Daten des Überwachungsbereichs (5) des Sensors (4) mit Positionsdaten von weiteren angeordneten Sensoren zu vergleichen und auf Übereinstimmung zu prüfen.

6. System (1) nach einem der vorhergehenden Ansprüche, **dadurch gekennzeichnet, dass** die Steuer- und Auswerteeinheit (6) ausgebildet ist den Schutzbereich (7) zu aktivieren, wenn der gefahrbringende Teil (9) der Maschine (3) sich in einer unerlaubten Position befindet.

7. System (1) nach einem der vorhergehenden Ansprüche, **dadurch gekennzeichnet, dass** die Maschine (3) eine mobile Maschine oder eine ortsfeste Maschine ist.

8. System (1) nach einem der vorhergehenden Ansprüche, **dadurch gekennzeichnet, dass** die Maschine (3) ein Roboter (12) ist und der Gefahrenbereich (2) der Maschine (3) ein Gefahrenbereich (2) des Roboters (12) ist.

9. Verfahren zur Überwachung eines Gefahrenbereichs (2) einer Maschine (3), mit mindestens einem Sensor (4) mit mindestens einem räumlichen Überwachungsbereich (5) zur Überwachung des Gefahrenbereichs (2),
und einer Steuer- und Auswerteeinheit (6),
wobei der Sensor (4) zyklisch 3D-Daten des Überwachungsbereichs (5) an die Steuer- und Auswerteeinheit (6) sendet,
wobei der Sensor (4) mindestens ein Schutzbereich (7) im Überwachungsbereich (5) erzeugt,
wobei die Steuer- und Auswerteeinheit (6) die empfangenen 3D-Daten des Überwachungsbereichs (5) mit bekannten Positionsdaten der Maschine (3) zu vergleicht und auf Übereinstimmung prüft,
wobei die Steuer- und Auswerteeinheit (6) Objekte (8) im Überwachungsbereich (5) des Sensors (4) anhand der 3D-Daten lokalisiert und deren Abstand zu einem gefahrbringenden Teil (9) der Maschine (3) bestimmt, wobei die Steuer- und Auswerteeinheit (6) ausgebildet ist, den Sensor (4) mit dem Schutzbereich (7) nicht zu überbrücken, falls der Abstand von Objekten (8) zu mindestens einem gefahrbringenden Teil der Maschine (3) vordefinierte erste Abstandswerte unterschreitet,
**dadurch gekennzeichnet, dass**
die Steuer- und Auswerteeinheit (6) den Sensor (4) mit dem Schutzbereich (7) überbrückt, solange eine Übereinstimmung der Positionsdaten vorliegt und den Sensor (4) mit dem Schutzbereich (7) nicht überbrückt, falls keine Übereinstimmung der Positionsdaten vorliegt.

## Claims

1. A system (1) for monitoring a hazardous zone (2) of a machine (3), comprising at least one sensor (4) having at least one spatial monitored zone (5) for monitoring the hazardous zone (2);
and a control and evaluation unit (6);
wherein the sensor (3) is configured to cyclically transmit 3D data of the monitored zone (5) to the control and evaluation unit (6);
wherein the sensor (4) is further configured to generate at least one protected zone (7) in the monitored zone (5);
wherein the control and evaluation unit (6) is configured to compare the received 3D data of the monitored zone (5) with known position data of the machine (2) and to check them for agreement;
wherein the control and evaluation unit (6) Is configured to localize objects (8) in the monitored zone (5) of the sensor (4) with reference to the 3D data and to determine their distance from a dangerous part (9) of the machine (3), wherein the control and evaluation unit (6) is configured not to bridge the sensor (4) having the protected zone (7) if the distance of objects (8) from at least one dangerous part of the machine (3) falls below predefined first distance values,
**characterized in that**
the control and evaluation unit (6) is configured to bridge the sensor (4) having the protected zone (7) as long as there is an agreement of the position data; and
not to bridge the sensor (4) having the protected zone (7) if there is no agreement of the position data.

2. A system (1) in accordance with claim 1, **characterized in that** a first sensor (10) is configured as a sensor (4) to cyclically deliver 3D data of the monitored zone (3) to the control and evaluation unit (6) and a second sensor (11) is configured as a sensor (4) to generate the protected zone (7).

3. A system (1) in accordance with claim 1, **characterized in that** the control and evaluation unit (6) is configured to cause at least a part (9) of the machine (3) to carry out an evasive movement if the distance of objects (8) from a dangerous part (9) the machine (3) falls below predefined second distance values.

4. A system (1) in accordance with any one of the preceding claims, **characterized in that** the control and evaluation unit (6) is configured to compare the received 3D data of the monitored zone (5) of the sensor (4) with known position data of the environment and to check them for agreement.

5. A system (1) in accordance with any one of the preceding claims, **characterized in that** the control and evaluation unit (6) is configured to compare the received 3D data of the monitored zone (5) of the sensor (4) with position data of further arranged sensors and to check them for agreement.

6. A system (1) in accordance with any one of the preceding claims, **characterized in that** the control and evaluation unit (6) is configured to activate the protected zone (7) when the dangerous part (9) of the machine (3) is in an unpermitted position.

7. A system (1) in accordance with any one of the preceding claims, **characterized in that** the machine (3) is a mobile machine or a fixed position machine.

8. A system (1) in accordance with any one of the preceding claims, **characterized in that** the machine (3) is a robot (12) and the hazardous zone (2) of the machine (3) is a hazardous zone (2) of the robot (12).

9. A method of monitoring a hazardous zone (2) of a machine (3), comprising at least one sensor (4) having at least one spatial monitored zone (5) for monitoring the hazardous zone (2);
and a control and evaluation unit (6);
wherein the sensor (4) cyclically transmits 3D data of the monitored zone (5) to the control and evaluation unit (6);
wherein the sensor (4) generates at least one protected zone (7) in the monitored zone (5);
wherein the control and evaluation unit (6) compares the received 3D data of the monitored zone (5) with known position data of the machine (2) and compares them for agreement;
wherein the control and evaluation unit (6) localizes objects (8) in the monitored zone (5) of the sensor (4) with reference to the 3D data and determines their distance from a dangerous part (9) of the machine (3), wherein the control and evaluation unit (6) is configured not to bridge the sensor (4) having the protected zone (7) if the distance of objects (8) from at least one dangerous part of the machine (3) falls below predefined first distance values
**characterized in that**
the control and evaluation unit (6) bridges the sensor (4) having the protected zone (7) as long as there is an agreement of the position data; and does not bridge the sensor (4) having the protected zone (7) if there is no agreement of the position data.

## Revendications

1. Système (1) de surveillance d'une zone de danger (2) d'une machine (3), comprenant au moins un capteur (4) avec au moins une zone de surveillance spatiale (5) pour surveiller la zone de danger (2),
et une unité de commande et d'évaluation (6),
dans lequel
le capteur (3) est conçu pour envoyer de manière cyclique des données 3D de la zone de surveillance (5) à l'unité de commande et d'évaluation (6),
le capteur (4) est en outre conçu pour générer au moins une zone de protection (7) dans la zone de surveillance (5),
l'unité de commande et d'évaluation (6) est conçue pour comparer les données 3D reçues de la zone de surveillance (5) avec des données de position connues de la machine (3) et pour en vérifier la concordance,
l'unité de commande et d'évaluation (6) est conçue pour localiser des objets (8) dans la zone de surveillance (5) du capteur (4) à l'aide des données 3D et pour déterminer leur distance par rapport à une partie dangereuse (9) de la machine (3),
l'unité de commande et d'évaluation (6) est conçue pour ne pas ponter le capteur (4) avec la zone de protection (7) si la distance entre des objets (8) et au moins une partie dangereuse (9) de la machine (3) est inférieure à des premières valeurs de distance prédéfinies,
**caractérisé en ce que**
l'unité de commande et d'évaluation (6) est conçue pour ponter le capteur (4) avec la zone de protection (7) tant qu'il y a une concordance des données de position, et pour ne pas ponter le capteur (4) avec la zone de protection (7) s'il n'y a pas de concordance des données de position.

2. Système (1) selon la revendication 1,
**caractérisé en ce qu'**un premier capteur (10) est conçu comme capteur (4) pour fournir de manière cyclique des données 3D de la zone de surveillance (5) à l'unité de commande et d'évaluation (6), et un deuxième capteur (11) est conçu comme capteur (4) pour générer la zone de protection (7).

3. Système (1) selon la revendication 1,
**caractérisé en ce que** l'unité de commande et d'évaluation (6) est conçue pour amener au moins une partie (9) de la machine (3) à effectuer un mouvement d'évitement si la distance entre des objets (8) et une partie dangereuse (9) de la machine (3) est inférieure à des deuxièmes valeurs de distance prédéfinies.

4. Système (1) selon l'une des revendications précédentes,
**caractérisé en ce que** l'unité de commande et d'évaluation (6) est conçue pour comparer les données 3D reçues de la zone de surveillance (5) du capteur (4) avec des données de position connues de l'environnement et pour en vérifier la concordance.

5. Système (1) selon l'une des revendications précédentes,
**caractérisé en ce que** l'unité de commande et d'évaluation (6) est conçue pour comparer les données 3D reçues de la zone de surveillance (5) du capteur (4) avec des données de position d'autres capteurs installés et pour en vérifier la concordance.

6. Système (1) selon l'une des revendications précédentes,
**caractérisé en ce que** l'unité de commande et d'évaluation (6) est conçue pour activer la zone de protection (7) si la partie dangereuse (9) de la machine (3) se trouve dans une position non autorisée.

7. Système (1) selon l'une des revendications précédentes,
**caractérisé en ce que** la machine (3) est une machine mobile ou une machine fixe.

8. Système (1) selon l'une des revendications précédentes,
**caractérisé en ce que** la machine (3) est un robot (12) et la zone de danger (2) de la machine (3) est une zone de danger (2) du robot (12).

9. Procédé de surveillance d'une zone de danger (2) d'une machine (3), comprenant
au moins un capteur (4) avec au moins une zone de surveillance spatiale (5) pour surveiller la zone de danger (2),
et une unité de commande et d'évaluation (6),
dans lequel
le capteur (4) envoie de manière cyclique des données 3D de la zone de surveillance (5) à l'unité de commande et d'évaluation (6),
le capteur (4) génère au moins une zone de protection (7) dans la zone de surveillance (5),
l'unité de commande et d'évaluation (6) compare les données 3D reçues de la zone de surveillance (5) avec des données de position connues de la machine (3) et en vérifie la concordance,
l'unité de commande et d'évaluation (6) localise des objets (8) dans la zone de surveillance (5) du capteur (4) à l'aide des données 3D et détermine leur distance par rapport à une partie dangereuse (9) de la machine (3),
l'unité de commande et d'évaluation (6) est conçue pour ne pas ponter le capteur (4) avec la zone de protection (7) si la distance entre des objets (8) et au moins une partie dangereuse (9) de la machine (3) est inférieure à des premières valeurs de distance prédéfinies,
**caractérisé en ce que**
l'unité de commande et d'évaluation (6) ponte le capteur (4) avec la zone de protection (7) tant qu'il y a une concordance des données de position et ne ponte pas le capteur (4) avec la zone de protection (7) s'il n'y a pas de concordance des données de position.
